# EUROPEAN PATENT APPLICATION

(11) **EP 1 334 870 A2**
(43) Date of publication of application: **13.08.2003**
(21) Application number: 03002813.8
(22) Date of filing: 07.02.2003
(51) Int. Cl.: B60Q 1/26

(54) **Flashing optical indicator device**

(30) Priority: 08.02.2002 IT MI20020234
(71) Applicant: LA SONORA S.r.l., 20024 Garbagnate Milanese (IT)
(72) Inventor: Balestrieri, Ugo, 20024 Garbagnate Milanese (IT)
(74) Representative: Jorio, Paolo

(57) **Abstract**

In a flashing optical indicator device (1), in particular for equipping emergency vehicles (police, fire, ambulance, etc.), a number of solid-state light sources (LEDs) (3), associated with respective optical elements (5), are arranged in a predetermined spatial pattern defining a substantially continuous, e.g. closed-loop, profile (4); and a control unit (6) selectively and successively activates the light sources (3) along the profile (4) in a predetermined sequence.

## Description

The present invention relates to a flashing optical indicator device, which is particularly suitable for emergency vehicles (police, fire, ambulance, etc.), but which may also be used to advantage on industrial vehicles and fixed or moving structures of various types to indicate moving parts or machinery, and in all situations in general requiring a flashing warning light.

Flashing devices, e.g. on emergency vehicles, are known which comprise a fixed light source, typically a filament lamp, with a rotary reflector, which rotates about the lamp to produce the desired flashing effect. Devices of this sort have various drawbacks, mainly on account of featuring a rotary mechanical member, which makes them relatively complicated, bulky, heavy, and at times unreliable. In addition, the lamps normally used in devices of this sort invariably have a short working life and consume large amounts of energy.

Other devices are known in which the light source is a flashing discharge lamp with a lens (normally a Fresnel lens), and the flashing effect is produced by turning the lamp on and off in alternating sequence. Devices of this sort also normally employ high-power lamps with a short working life, and, though no rotary members are involved, are relatively expensive, bulky and heavy.

Moreover, all the above devices allow of little freedom in terms of geometry, thus limiting the design options available.

It is an object of the present invention to provide a flashing optical indicator device designed to eliminate the aforementioned drawbacks of the known state of the art.

According to the present invention, there is provided a flashing optical indicator device, characterized by comprising a number of solid-state light sources arranged in a predetermined spatial pattern defining a substantially continuous profile; a number of optical elements associated with the light sources; and a control unit for selectively and successively activating said light sources along said profile in a predetermined sequence.

The device according to the invention therefore involves no rotary mechanical parts or conventional high-power lamps with a short working life, is compact and lightweight, is cheap and easy to produce and cheap and reliable to operate, and allows a good deal of freedom in terms of geometry, thus enabling a wide range of design options.

A number of non-limiting embodiments of the invention will be described by way of example with reference to the accompanying drawings, in which:
Figure 1 shows a schematic plan view of a flashing optical indicator device in accordance with the invention;
Figure 2 shows a schematic view in perspective, with parts in section and parts removed for clarity, of a preferred embodiment of the Figure 1 device;
Figure 3 shows a schematic, larger-scale, exploded view in perspective of a first detail of the Figure 2 device;
Figure 4 shows a schematic, larger-scale view in perspective of a second detail of the Figure 2 device.

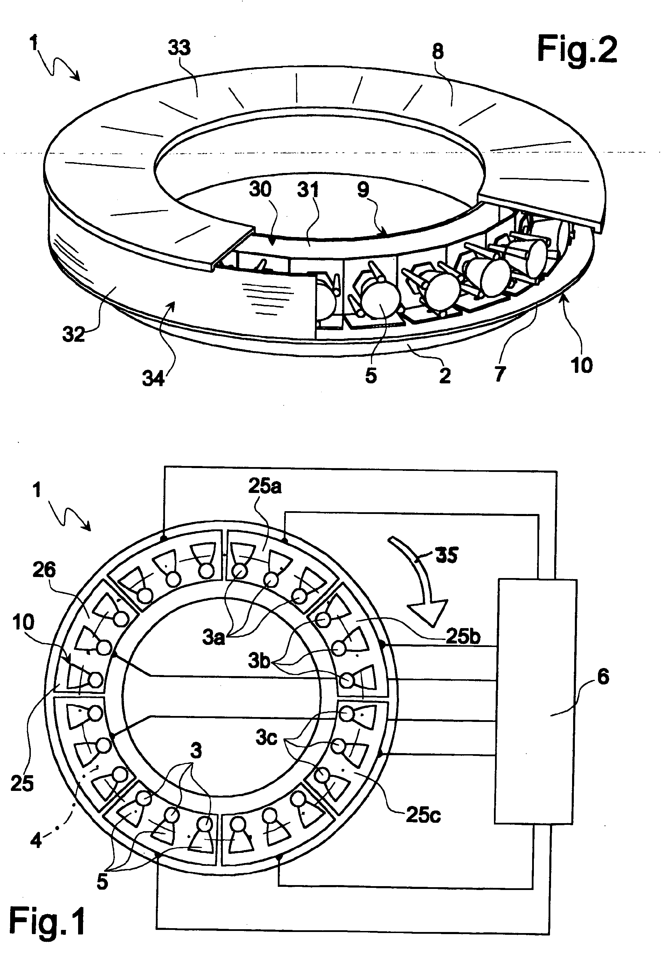

Number 1 in the accompanying drawings indicates as a whole a flashing optical indicator device, in particular for emergency or industrial vehicles or fixed or moving structures of various types. Device 1 comprises a supporting structure 2; a number of solid-state light sources 3 fitted to supporting structure 2 and arranged in a predetermined spatial pattern defining a substantially continuous profile 4 (shown by the a dash-and-dot line in Figure 1); a number of optical elements 5 associated with light sources 3; and a control unit 6 connected electrically to light sources 3 to selectively and successively activate light sources 3 along profile 4 in a predetermined sequence.

More specifically, light sources 3 are known light-emitting diodes (LEDs), and are arranged side by side to form a closed, e.g. substantially circular, loop, so that profile 4 is a closed-loop profile (which, in the purely non-limiting example shown in Figures 1 and 2, is circular). Light sources 3, however, may be arranged otherwise than as shown and described purely by way of example, and, in particular, may form closed-loop profiles of different shapes (generally elongated, rectangular, oval, elliptical, etc.).

Supporting structure 2 comprises an annular base 7; a housing 8; a central opening 9 defining a seat for an auxiliary device (e.g. a known fixed or swing light not shown); and known fastening members (not shown) for assembly to a supporting surface, e.g. a surface of the vehicle or structure to which device 1 is to be fitted.

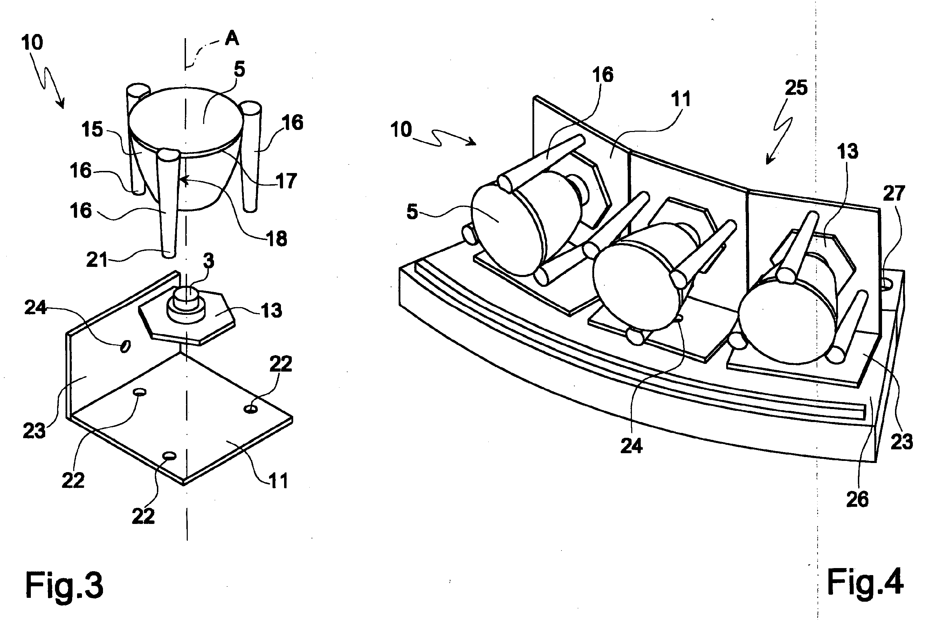

Light sources 3 are arranged in preassembled modular units 10, each of which (Figure 3) comprises a light source 3, an optical element 5, and a plate 11. Light source 3 is fitted to a known mount 13 (shown only schematically, and which, according to a known solution, may also comprise an integrated heat-dissipating plate); and mount 13 is fixed to plate 11, for example, by means of known heat-conducting adhesive.

Plate 11 is a substantially flat heat-dissipating plate made, for example, of metal and of any shape.

Optical element 5 is a total-internal-reflection lens, and comprises a substantially cup-shaped optical body 15 made of transparent plastic material (e.g. polycarbonate PC or polymethyl methacrylate PMMA) and having an optical axis A.

Optical element 5 is such as to impart to the light beam emitted by respective light source 3 a cross section having a predominant dimension. More specifically, the optical element is such as to impart to the light beam emitted by the respective light source a substantially oval cross section with an axis ratio of about 2:1, and, in particular, respective angles of about ±4° and ±8° in directions perpendicular to each other and to optical axis A. In actual use, modular unit 10 is mounted so that optical axis A is substantially horizontal, and the beam has a vertical angle of about ±4°, and a horizontal angle of about ±8°.

Optical body 15 is fitted with three (or more) rods 16 spaced circumferentially apart along a peripheral edge 17 of optical body 15, and by which optical element 5 is supported on and projects from plate 11. Rods 16 are separated by radial gaps 18 for effectively ventilating light source 3.

Rods 16 are fixed in any known manner to plate 11, e.g. by inserting and fixing their respective longitudinal free ends 21 inside respective seats 22 formed in the plate.

When the modular unit is assembled (Figure 4), optical element 5 rests axially against mount 13 and is secured to plate 11 by rods 16; and light source 3 and mount 13 are gripped between optical element 5 and plate 11.

Plate 11 has a fastening portion 23 defined, for example, by a flange perpendicular to plate 11, and having mechanical fastening means 24 (shown schematically by holes for respective fastening members, screws or rivets) for assembly to supporting structure 2, which may be done in any known way (even by gluing or welding).

Modular units 10 are carried by supporting structure 2, to which they can be fixed in predetermined positions (in the predetermined spatial pattern defining profile 4). In the purely non-limiting embodiment referred to herein, modular units 10 are grouped into modules 25, each comprising, for example, three modular units 10 fitted to a common plate 26 (Figure 4). That is, as opposed to modular units 10 being fitted directly to supporting structure 2, each modular unit 10 is fixed to plate 26 of module 25 (by mechanical fastening means 24), and plate 26 in turn is fixed to supporting structure 2. Obviously, plate 26 may also be fastened to supporting structure 2 in any known manner, e.g. by mechanical fastening means shown schematically by a hole 27 formed in plate 26 and for receiving a respective fastening member.

Modular units 10 may even be fitted directly and singly to supporting structure 2.

For the sake of simplicity, the electric connections of supporting structure 2 and/or each plate 26 for supplying electrical power to light sources 3 and for connecting light sources 3 and control unit 6 are not shown.

Modular units 10, grouped or not into modules 25, are housed inside a substantially annular chamber 30 of housing 8; which chamber 30 is defined by a radially inner rear wall 31, and by a transparent radially outer screen 32, and is closed by an annular cover 33 facing annular base 7.

Screen 32 has a known optical surface 34 for blending distribution of the beams emitted by individual optical elements into a uniform beam.

In actual use, control unit 6 activates light sources 3 selectively and successively in a predetermined sequence along profile 4. More specifically (Figure 1), control unit 6 successively turns on light sources 3 of successive adjacent modules 25 along profile 4 in the direction shown, for example, by arrow 35 in Figure 1. That is, control unit 6 turns on light sources 3a of a first module 25a, then light sources 3b of a module 25b adjacent to module 25a, then light sources 3c of a further module 25c, and so on. Control unit 6 may turn off light sources 3a of module 25a and turn on light sources 3b of the adjacent module 25b either simultaneously or after a given delay, to obtain different visual effects.

Though simultaneously turning on all the light sources 3 of each module 25 produces a brighter and, above all, more visible flash (made uniform by optical surface 34 of screen 32), each light source 3 may obviously also be activated singly. Different visual effects can also be produced by varying the turn-on times of individual light sources 3; and the direction and sequence in which the sources are activated, and the time intervals between activation of successive sources, may obviously be varied as required.

Clearly, changes may be made to the device as described and illustrated herein without, however, departing from the scope of the present invention.

## Claims

1. A flashing optical indicator device (1), **characterized by** comprising a number of solid-state light sources (3) arranged in a predetermined spatial pattern defining a substantially continuous profile (4); a number of optical elements (5) associated with the light sources (3); and a control unit (6) for selectively and successively activating said light sources (3) along said profile (4) in a predetermined sequence.

2. A device as claimed in Claim 1, **characterized in that** said profile (4) is a closed-loop profile; said light sources (3) being arranged side by side to form a closed loop.

3. A device as claimed in Claim 1 or 2, **characterized in that** each light source (3) is associated with a respective optical element (5).

4. A device as claimed in Claim 3, **characterized in that** the optical element (5) associated with each light source (3) is a total-internal-reflection lens for imparting to the light beam emitted by the respective light source (3) a cross section having a predominant dimension.

5. A device as claimed in Claim 4, **characterized in that** said optical element (5) is such as to impart to the light beam emitted by the respective light source (3) a substantially oval cross section with an axis ratio of about 2:1.

6. A device as claimed in Claim 4 or 5, **characterized in that** said optical element (5) is such as to impart to the light beam emitted by the respective light source (3) respective angles of about ±4° and about ±8° in directions perpendicular to each other and to an optical axis (A) of said optical element (5).

7. A device as claimed in one of the foregoing Claims, **characterized by** comprising a number of preassembled modular units (10); each modular unit (10) comprising at least one light source (3), an optical element (5), and a supporting plate (11).

8. A device as claimed in the foregoing Claim, **characterized in that** the preassembled said modular units (10) are fitted to a supporting structure (2); electrical connections and mechanical fasteners being provided to connect each modular unit (10) to the supporting structure (2).

9. A device as claimed in any one of the foregoing Claims, **characterized in that** the light sources (3) are light-emitting diodes (LEDs).
